# EUROPEAN PATENT SPECIFICATION

(11) **EP 1 419 695 B1**
(45) Date of publication and mention of the grant of the patent: **16.04.2008**
(21) Application number: 03078571.1
(22) Date of filing: 12.11.2003
(51) Int. Cl.: A22B 5/00

(54) **Slaughtering device and measuring device as applicable therein**
Vorrichtung zum Schlachten und dazu verwendbare Messvorrichtung
Dispositif d'abattage et dispositif de mesure applicable dans ce dispositif

(30) Priority: 15.11.2002 NL 1021928
(43) Date of publication of application: 19.05.2004
(73) Proprietor: Foodvision B.V., 7678 VE Geesteren (NL)
(72) Inventor: Meinders, Leo Antonius Bernardus Casper, 7661 RV Vasse (NL)
(74) Representative: Jilderda, Anne Ayolt

(56) References cited:
- EP-A- 0 212 580
- EP-A- 0 489 984
- EP-A- 0 635 210
- WO-A-97/21352
- FR-A- 2 551 950
- FR-A- 2 694 515
- NL-C- 1 012 267
- US-A- 3 916 484
- US-B1- 6 623 348

## Description

The present invention relates to a slaughtering device for performing a process locally on a slaughtered animal, comprising positioning means for positioning an animal for processing, a measuring device for determining a desired processing position and a processing device for processing the animal at the determined location. The invention herein relates particularly, though not solely, to such a device for separating a skull and a vertebral column of a slaughtered animal with a separating device for separating the skull and the vertebral column of the animal at the determined location.

Such a slaughtering device is known for instance from EP-A-06352108 Netherlands patent application number 9301306, and is applied particularly to remove the head from slaughtered livestock in a mechanical slaughtering line. In the known device a slaughtered animal, more specifically a slaughtered pig, positioned vertically and suspended from the hind legs, is guided in a rail system along the slaughtering device. Here the neck of the animal is severed using a hydraulically or pneumatically scissor tool. A precise positioning of the separating device is of great importance here. If the separation is carried out too far toward the head, bone splinters will enter the meat, while a separation too far from the head will leave valuable residual meat behind on the head, resulting in unacceptable loss.

For the purpose of controlling the separating device the known device comprises a measuring device with which the desired separating position is determined. The measuring device herein comprises a sensor, such as a pointed pin, which comes into contact with the animal for processing during operation and thus scans the anatomy by means of a hard detection in order to determine the ideal processing position. The pin is herein placed through the soft neck tissue so as to come into contact with a rear surface of the skull.

A drawback of this known detection method however is that it is relatively time-consuming and causes cross-contamination due to the necessary interaction with the slaughtered animals. In addition, the moving detection means are relatively susceptible to malfunction.

In the known slaughtering device it is possible as alternative to apply a video camera having coupled thereto signal processor means for establishing the desired processing position from a recording of the total anatomy of the animal for processing. Such a camera system is however expensive and vulnerable, and requires an exceptional computing power of the processor means to be able to calculate a processing position with an acceptable tolerance within an acceptable time.

The present invention has for its object, among others, to provide a slaughtering device of the type stated in the preamble which does not have these drawbacks, or has them to a significantly lesser extent.

In order to achieve the stated objective, a slaughtering device of the type stated in the preamble has the feature according to the invention that the measuring device comprises a light source which is adapted to generate a linear light image and project it at the position of an irregularity in the anatomy of the animal, that the measuring device comprises an image detector for detecting a light image projected on the animal, and that the image detector is coupled to processor means for the purpose of determining the desired operating position from a disturbance in the detected light image and controlling the processing device on the basis thereof. In contrast to the known device, it is therefore not a total image of the animal that is processed in the device according to the invention but only the linear image projected thereon by the light source. An irregularity in the anatomy of the slaughtered animal provides a disturbance in the linear image which, owing to the relative simplicity of the image, can be localized with great precision. The vertical position of the irregularity can be derived directly from the image, while the distance from the image detector can be calculated from the lateral position of the image as seen in the direction of displacement of the animal. A three-dimensional determination of the position of the irregularity can thus be realized which can then serve as reference point to determine the desired operating position.

A particular embodiment of the slaughtering device according to the invention is characterized in that the anatomical irregularity comprises an ear implant of the animal. Particularly in the case of pigs, the ear connection or implant of the animal is found to be a particularly reliable reference point for the relative position of other parts of the animal which is relatively insensitive to individual fluctuations in the weight and length of the animal. In a further particular embodiment, the device according to the invention has the feature that the processing device comprises a separating device for separating a skull and the vertebral column of the animal, and use can advantageously be made of the above mentioned reference point. A further embodiment of the slaughtering device according to the invention is characterized for this purpose in that the processor means are adapted and able to derive from the detected light image a transition between the skull and a first cervical vertebra of the animal as desired separating position.

The desired operating position can be determined per se with any disposition of the light source and image detector according to the invention, but in a preferred embodiment the slaughtering device according to the invention has the feature that the image detector is disposed to detect the light image at least practically in an imaginary plane of symmetry of the animal, and the light source is disposed outside the plane of symmetry to cause the linear light image to be incident at a solid angle to the plane of symmetry. As will be further elucidated hereinbelow, with such a relative positioning of the light source and the image detector in relation to the animal for processing, a limited number of goniometric relations is sufficient to establish the desired operating position and to enable effective control of the separating device.

In a particular embodiment the slaughtering device according to the invention is characterized in that the processor means are adapted and able to derive from the detected light image a transition between the skull and a first cervical vertebra of the animal as desired separating position. It is found possible in practice to be able to derive the indicated position unambiguously from a disturbance in the light image caused at the position of the ear implant of the animal, and this position gives the optimal slaughtering yield.

In order to prevent the action of the separating device on the animal for processing resulting in a disturbance of the desired processing position, a further preferred embodiment of the slaughtering device according to the invention is characterized in that the positioning means comprise at least one clamping device which is able and adapted to enclose the animal for processing in fixedly clamped manner, at least during separating of skull and vertebral column. Before the separating device can move the animal for processing, the animal is held clamped fixedly and the desired operating position is fixed.

In addition to the separation of the skull and vertebral column of a slaughtered animal, other operations on the carcass of an animal for processing can be aligned according to the invention on a fixed point on the carcass. The invention therefore also relates to a measuring device, comprising a light source which is adapted to generate a linear light image and an image detector to detect a light image of the light source projected on an animal for processing, wherein the image detector is coupled to processor means for determining a desired operating position from the detected light image and for controlling an operation on the animal on the basis thereof.

The invention will be further elucidated hereinbelow on the basis of an embodiment and an associated drawing. In the drawing:
- figure 1: shows a rear view of an embodiment of a slaughtering device according to the invention;
- figure 2: shows a slaughtered pig during a processing stage in the slaughtering device of figure 1;
- figure 3: is a top view of the measuring device in the slaughtering device of figure 1; and
- figure 4: is a side view of the separating device in the device of figure 1.

The figures are otherwise purely schematic and not drawn to scale. Some dimensions in particular are exaggerated to a greater or lesser extent for the sake of clarity. Corresponding parts are designated as far as possible in the figures with the same reference numeral.

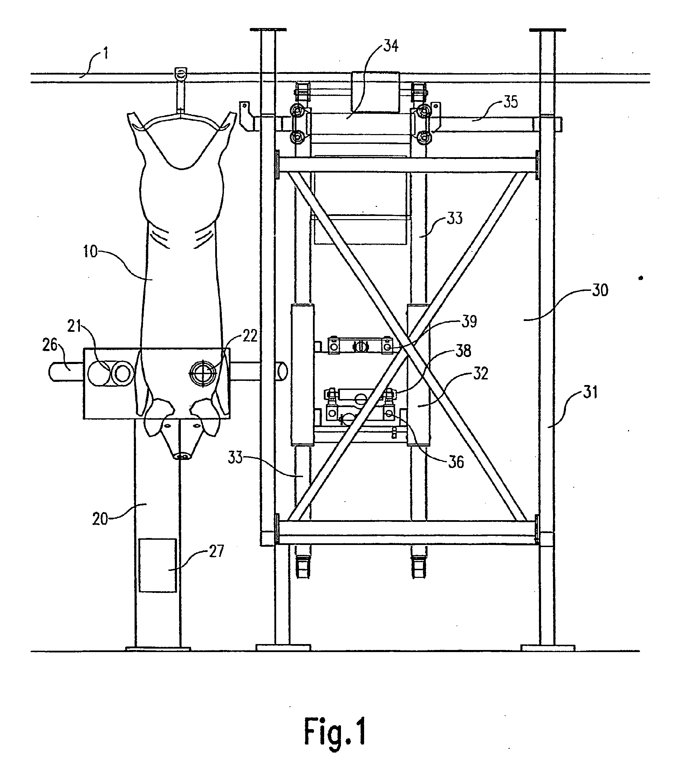

Figure 1 shows a slaughtering device for pigs according to one embodiment of the invention, such as can be applied separately as well as in an existing slaughtering line. Incorporation in an existing slaughtering line is assumed in this embodiment, wherein slaughtered pigs 10 are fed and discharged continuously via a rail system 1. The pigs are herein positioned at a suitable height for the device on positioning means in the form of hooks 5 which run over rails 1 and from which the slaughtered pigs are suspended with the hind legs. Like practically all parts of the device, rails 1 and hooks 5 are manufactured from high-grade stainless steel and readily allow thorough cleaning to prevent contamination of meat.

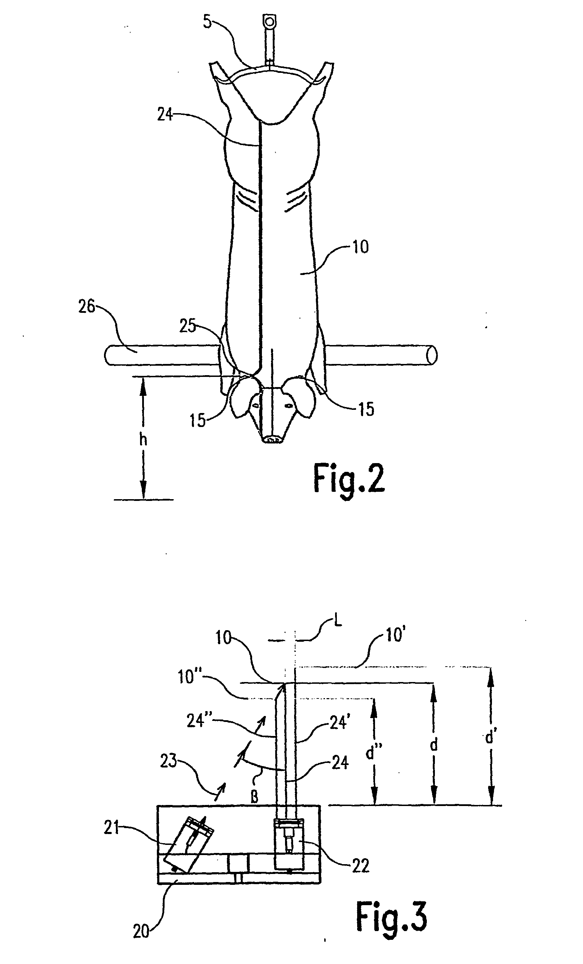

Arranged successively along the route of rails 1 are a console 20, having therein a measuring device 21,22, and a separating device 30. The measuring device comprises according to the invention a light source 21 and an image detector 22. In this embodiment the light source comprises a laser, a beam 23 of which exits via an optical system (not shown) and thereby casts a linear light image 24 on the slaughtered pig, see also figures 2 and 3. Light source 21 and slaughtered pig 10 are herein aligned such that the light image 23 is incident at least practically at the position of the ear connection or implant 15 of the animal 10 at the moment that the continuously displacing animal 10 is situated in the field of image detector 22. Image detector 22 here comprises a high-resolution image recording tube of the type used in high-quality video recording systems, although due to the relative simplicity of the light image 24 it is optionally also possible to suffice with a simpler CCD or similar sensor as applied in more ordinary video equipment. In this embodiment the image detector is then situated at least almost in an imaginary plane of symmetry of the animal, while the light source is disposed outside of this plane, so that light image 24 is incident at a solid angle β. Placed in front of the image detector is an optical pass band filter (not further shown) with a pass wavelength adapted to the wavelength of the light emitted by light source 21. A possibly disturbing influence from ambient light can thus be filtered out and the contrast of the line image relative to the background can be enhanced.

The ear implant 15 of the pig forms an irregularity in the otherwise almost straight back of the animal. This irregularity is translated into a corresponding disturbance of the linear light image 24 of the light beam 23 incident at an angle. This disturbance is expressed as a kink 25 which thus indicates with a high degree of precision the position of ear implant 15. This position is found in practice to be a reliable reference for performing position-critical operations on the animal. An example of such an operation is the separation of the skull and vertebral column. This operation ideally takes place between the skull and the first cervical vertebra of the animal. The distance between this transition and the ear implant 15 is found in practice to have a relatively accurate fixed value, irrespective of the size of the pig.

The kinked line image 24 is detected with the image detector 22. A secondary light source 26 in the form of a tubular lamp 26 is placed behind the animal. This light source 26 provides a uniform background lighting of the animal. The detected image thereby comprises a bright background having therein a dark spot at the position of the animal over which in turn the light image runs as a vertical stripe. As soon as this stripe is detected halfway along the animal, the recording of images is started, this at a frequency of 25 images per second. The camera system of the image detector is coupled to suitable, schematically shown image processor means 27 with which the detected images are analysed at high speed. As soon as the light stripe 24 runs over the ear implant, the light image 24 displays the indicated kink 25. The vertical position of ear implant 15 can thus be determined from the height h of the kink 25. At a normal transporting speed of the animal in the slaughter line, between 40 and 80 images can thus be detected and a corresponding number of height determinations made. By averaging these height determinations and ignoring evidently incorrect measurements, an extremely reliable determination of the ear height of the animal can thus be obtained. The position for the separation of skull and vertebral column can be derived directly from this ear height. The horizontal distance of the animal from the device 20 can on the other hand be derived with a high degree of precision from the lateral position of light image 24. This is shown schematically in figure 3 and will be further elucidated below.

At a nominal distance d of pig 10 from console 20, the light image 24 will be detected at a nominal position by image detector 22. If however the animal hangs further to the rear, indicated schematically with a shadow line 10', the image 24' will be detected a distance L further to the right. The distance d' from the animal now follows from the relation d'=d +L/tan(β), wherein β is the solid angle at which the light beam 23 is incident upon the animal. If on the other hand the animal is located closer to console 20, as indicated schematically with line 10", the light image 24" will be detected a distance L further to the left. For the distance d" there now applies d"=d-L/tan(B). From the linear light image 24 detected with the image detector a three-dimensional position determination of the ear implant of animal 10 can thus be calculated, from which the desired operating position can be derived.

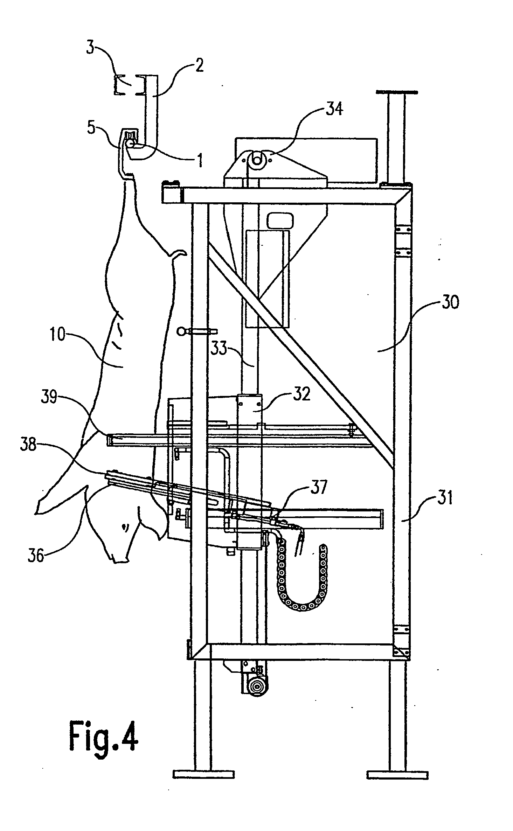

On the basis of this value the measuring device 20 controls separating device 30 which is adjusted on the basis of the thus determined position. For this purpose the separating device comprises, see also figure 4, a frame 31 having therein carriage 32 which is displaceable along vertical rail 33, wherein rails 33 are placed in a sub-frame 34 and are displaceable as a whole along horizontal rails 35 in the direction of transport of the animal. Accommodated in carriage 32 are hydraulic scissors 36 with which the skull of the animal can be cut loose from the vertebral column. Scissors 36 are situated on an outer end of a pneumatic cylinder 37 and can thereby be moved outside the frame 30 onto animal 10 to reach the desired location. Carriage 32 is controlled on the basis of the measured vertical position of the ear implant so that scissors 36 also occupy the desired vertical position. The separating operation is thus carried out at the correct location. Placed on scissors 36 is a clamping device 38 which follows the movement of the scissors and grasps the head of the animal laterally just before the scissors enter and do their work. This avoids the head slipping out during the separating operation.

During the operation the sub-frame 34 co-displaces with the continuously moving pig 10 so that scissors 36 and pig 10 retain a fixed relative position in respect of each other at all times. Also contributing hereto is a further pneumatic clamping device 39 which also moves out of frame 31 and encloses the animal laterally in fixedly clamped manner at about shoulder height. Clamping device 39 is also mounted on the carriage 32 controlled by measuring device 20, and thereby always grasps the animal at a fixed height relative to the separating tool 36. Owing to this fixation, and in particular the precise position determination and control of the separating operation by the measuring device, a separation between skull and vertebral column of the animal can thus be performed with an exceptionally small loss of usable meat and without undesirable crushing of skeletal parts of the animal.

Although the invention has been elucidated above with reference to a single exemplary embodiment, it will be apparent that the invention is by no means limited thereto. On the contrary, many variations and embodiments are still possible within the scope of the invention for a person with ordinary skill in the art. Use can therefore be made of a non-coherent light source as light source instead of a laser. The relative orientation of the light source, image detector and the animal for processing can also be varied as desired to correspond optimally with the actual requirement. In addition, different light sources can be combined with an image detector to obtain different light images on the animal and to derive therefrom an even more reliable mean value for the position determination.

The separating operation was performed in the embodiment with hydraulic scissors, although mechanical or pneumatic scissors can also be applied instead, or it is even possible to resort to the use of other separating techniques, such as for instance sawing. If desired, fixation by means of a clamping device can be omitted or, conversely, the fixation can be reinforced by making use of more than two clamping devices, each at its own height.

A precise position determination of an irregularity in the anatomy of the animal is possible as a result of the device. On the basis thereof a localized operation can be carried out with an extremely high degree of precision. This is not limited to the separation of head and vertebral column of a pig, but can also be applied for other operations on the animal and for animals other than slaughtered pigs. Although the ear implant in a pig provides a relatively fixed and reliable reference point, the linear light image according to the invention can also be cast onto another zone of the animal with an irregularity and detected at that position, such as for instance at the position of a leg implant, for the purpose of severing thereof. The local disturbance in the light image resulting from such an irregularity provides in each case a readily determinable reference point for performing a local operation.

## Claims

1. Slaughtering device for performing a process locally on a slaughtered animal, comprising positioning means for positioning an animal for processing, a measuring device for determining a desired processing position and a processing device for processing the animal at the determined location, **characterized in that** the measuring device comprises a light source which is adapted to generate a linear light image and project it at the position of an irregularity in the anatomy of the animal, that the measuring device comprises an image detector for detecting a light image projected on the animal, and that the image detector is coupled to processor means for the purpose of determining the desired processing position from a disturbance in the detected light image and controlling the processing device on the basis thereof.

2. Slaughtering device as claimed in claim 1, **characterized in that** the anatomical irregularity comprises an ear implant of the animal.

3. Slaughtering device as claimed in claim 1 or 2, **characterized in that** the processing device comprises a separating device for separating a skull and a vertebral column of the animal.

4. Slaughtering device as claimed in claim 1, 2 or 3, **characterized in that** the processor means are adapted and able to derive from the detected light image a transition between the skull and a first cervical vertebra of the animal as desired separating position.

5. Slaughtering device as claimed in any of the foregoing claims, **characterized in that** the image detector is disposed to detect the light image at least practically in an imaginary plane of symmetry of the animal, and the light source is disposed outside the plane of symmetry to cause the linear light image to be incident at a solid angle to the plane of symmetry.

6. Slaughtering device as claimed in one or more of the foregoing claims, **characterized in that** the positioning means comprise at least one clamping device which is able and adapted to enclose the animal for processing in fixedly clamped manner, at least during the operation.

7. Slaughtering device as claimed in any of the foregoing claims, **characterized in that** the light source comprises a laser.

8. Slaughtering device as claimed in one or more of the foregoing claims, **characterized in that** an optical band filter is placed in front of the image detector.

9. Slaughtering device as claimed in any of the foregoing claims, **characterized in that** a secondary light source is placed on a side of the animal remote from the image detector.

10. Measuring device as applicable in the slaughtering device as claimed in one or more of the foregoing claims, comprising a light source which is adapted to generate a linear light image and an image detector to detect a light image of the light source projected on an animal for processing, wherein the image detector is coupled to processor means for determining a desired operating position from the detected light image and to control an operation on the animal on the basis thereof.

## Patentansprüche

1. Schlachtungsvorrichtung, um lokal an einem geschlachteten Tier Verarbeitungsschritte durchzuführen, mit Positionierungsmitteln, um das Tier für die Verarbeitung zu positionieren, einer Messvorrichtung zur Bestimmung einer gewünschten Verarbeitungsposition, und einer Verarbeitungsvorrichtung zur Verarbeitung des Tieres an der bestimmten Position, **dadurch gekennzeichnet, dass** die Messvorrichtung eine Lichtquelle aufweist, die daran angepasst ist, eine lineare optische Abbildung zu erzeugen und diese auf die Position einer Unregelmäßigkeit in der Anatomie des Tieres zu projizieren, dass die Messvorrichtung einen Bilddetektor aufweist, um eine lineare optische Abbildung zu detektieren, die auf das Tier projiziert ist, und dass der Bilddetektor an eine Rechenvorrichtung gekoppelt ist, mit dem Ziel, die gewünschte Verarbeitungsposition aus einer Störung in der detektierten linearen optischen Abbildung zu bestimmen und hierauf basierend die Verarbeitungsvorrichtung zu steuern.

2. Schlachtungsvorrichtung gemäß Anspruch 1, **dadurch gekennzeichnet, dass** die anatomische Unregelmäßigkeit eine Ohrimplantation des Tieres umfasst.

3. Schlachtungsvorrichtung gemäß Anspruch 1 oder 2, **dadurch gekennzeichnet, dass** die Verarbeitungsvorrichtung eine Trennvorrichtung aufweist, um Schädel und Wirbelsäule des Tieres zu trennen.

4. Schlachtungsvorrichtung gemäß Anspruch 1, 2 oder 3, **dadurch gekennzeichnet, dass** die Rechenvorrichtung daran angepasst und dazu eingerichtet ist, aus der detektierten optischen Abbildung den Übergang zwischen dem Schädel und einem ersten Halswirbel des Tieres als gewünschte Verarbeitungsposition abzuleiten.

5. Schlachtungsvorrichtung gemäß einem der vorhergehenden Ansprüche, **dadurch gekennzeichnet, dass** der Bilddetektor so angeordnet ist, dass er die optische Abbildung, zumindest praktisch, in einer imaginären Symmetrieebene des Tieres detektiert, und dass die Lichtquelle außerhalb der Symmetrieebene so angeordnet ist, dass die lineare optische Abbildung in einem Raumwinkel zur Symmetrieebene auftrifft.

6. Schlachtungsvorrichtung gemäß einem oder mehreren der vorhergehenden Ansprüche, **dadurch gekennzeichnet, dass** die Positionierungsmittel mindestens eine Klemmeinrichtung aufweisen, die angepasst und eingerichtet ist, um mindestens während des Verarbeitungsvorganges das Tier zur Verarbeitung in einer fest eingeklemmten Weise zu umschließen.

7. Schlachtungsvorrichtung gemäß einem der vorhergehenden Ansprüche, **dadurch gekennzeichnet, dass** die Lichtquelle einen Laser aufweist.

8. Schlachtungsvorrichtung gemäß einem oder mehreren der vorhergehenden Ansprüche, **dadurch gekennzeichnet, dass** vor dem Bilddetektor ein optischer Bandfilter angeordnet ist.

9. Schlachtungsvorrichtung gemäß einem der vorhergehenden Ansprüche, **dadurch gekennzeichnet, dass** eine sekundäre Lichtquelle auf einer von dem Bilddetektor abgelegenen Seite des Tieres platziert ist.

10. Messvorrichtung, die in der Schlachtungsvorrichtung gemäß einem oder mehreren der vorhergehenden Ansprüche anwendbar ist, mit einer Lichtquelle, welche an die Erzeugung einer linearen optischen Abbildung angepasst ist, und einem Bilddetektor, um eine von der Lichtquelle für die Verarbeitung auf das Tier projizierte optische Abbildung zu detektieren, wobei der Bilddetektor an eine Recheneinheit gekoppelt ist, um eine gewünschte Arbeitsposition aus der detektierten optischen Abbildung zu bestimmen und hierauf basierend einen Arbeitsschritt am Tier zu steuern.

## Revendications

1. Dispositif d'abattage pour effectuer un traitement local sur un animal abattu, comprenant des moyens de positionnement pour positionner un animal en vue du traitement, un dispositif de mesure pour déterminer une position souhaitée pour le traitement et un dispositif de traitement pour traiter l'animal au niveau de la position déterminée, **caractérisé en ce que** le dispositif de mesure comprend une source de lumière qui est adaptée pour générer une image de lumière linéaire et pour la projeter au niveau de la position d'une irrégularité dans l'anatomie de l'animal ; **en ce que** le dispositif de mesure comprend un détecteur d'images pour détecter une image de lumière projetée sur l'animal ; et **en ce que** le détecteur d'images est couplé à un processeur, dans le but de déterminer la position de traitement souhaitée à partir d'une perturbation dans l'image de lumière détectée, et de commander le dispositif de traitement sur la base de celle-ci.

2. Dispositif d'abattage selon la revendication 1, **caractérisé en ce que** l'irrégularité anatomique comprend l'implantation d'une oreille de l'animal.

3. Dispositif d'abattage selon la revendication 1 ou 2, **caractérisé en ce que** le dispositif de traitement comprend un dispositif de séparation pour séparer un crâne et une colonne vertébrale de l'animal.

4. Dispositif d'abattage selon la revendication 1, 2 ou 3, **caractérisé en ce que** le processeur est adapté pour, et est apte à, déduire à partir de l'image de lumière détectée une transition entre le crâne et une première vertèbre cervicale de l'animal en tant que position de séparation souhaitée.

5. Dispositif d'abattage selon l'une quelconque des revendications précédentes, **caractérisé en ce que** le détecteur d'images est disposé de façon à détecter l'image de lumière au moins pratiquement sur un plan de symétrie imaginaire de l'animal ; et la source de lumière est disposée à l'extérieur du plan de symétrie de façon à amener l'image de lumière linéaire à être incidente selon un angle solide par rapport au plan de symétrie.

6. Dispositif d'abattage selon une ou plusieurs des revendications précédentes, **caractérisé en ce que** les moyens de positionnement comprennent au moins un dispositif de serrage qui est apte à, et adapté pour, enserrer l'animal en vue du traitement d'une manière fixement serrée, au moins durant l'opération.

7. Dispositif d'abattage selon l'une quelconque des revendications précédentes, **caractérisé en ce que** la source de lumière comprend un laser.

8. Dispositif d'abattage selon une ou plusieurs des revendications précédentes, **caractérisé en ce qu'**un filtre à bande optique est placé devant le détecteur d'images.

9. Dispositif d'abattage selon l'une quelconque des revendications précédentes, **caractérisé en ce qu'**une source de lumière secondaire est placée sur un côté de l'animal, éloigné du détecteur d'images.

10. Dispositif de mesure tel qu'applicable dans le dispositif d'abattage selon une ou plusieurs des revendications précédentes, comprenant une source de lumière qui est adaptée pour générer une image de lumière linéaire, et un détecteur d'images pour détecter une image de lumière de la source de lumière projetée sur un animal en vue d'un traitement, dans lequel le détecteur d'images est couplé à un processeur, dans le but de déterminer une position d'opération souhaitée à partir de l'image de lumière détectée, et de commander une opération sur l'animal, sur la base de celle-ci.
